# EUROPEAN PATENT APPLICATION

(11) **EP 2 388 531 A2**
(43) Date of publication of application: **23.11.2011**
(21) Application number: 11166688.9
(22) Date of filing: 19.05.2011
(51) Int. Cl.: F24D 5/10, F24H 7/04, F24F 1/00

(54) **Method and arrangement in connection with heating system of building**

(30) Priority: 21.05.2010 FI 20105565
(71) Applicant: Jukka, Raimo, 02820 Espoo (FI)
(72) Inventor: Jukka, Raimo, 02820 Espoo (FI)
(74) Representative: Valkeiskangas, Tapio Lassi Paavali

(57) **Abstract**

The invention relates to a method and arrangement in connection with a heating system of a building, the heating system comprising heating means (5) for heating the building. A cellular structure (4) is placed between an inner wall (2) and an outer wall (1) of the building. Through the cellular structure (4), air is circulated by means of the heating means/heat recover devices (5) in a closed space, the cellular structure (4) recovering heat transferred from inside the building through its framework and heat insulation (3) and removing moisture.

## Description

The invention relates to a method in connection with a heating system of a building, the heating system comprising heating means/heat recovery devices for heating a building. The invention also relates to an arrangement in connection with a heating system of a building.

Already for several years the aim with heating buildings has been to decrease heating energy consumption. Different heat recovery systems have been developed in the field to reduce consumption of energy. These heat recovery systems use the heat contained in the air flowing out of a building to warm incoming air.

Other systems also developed for reducing energy consumption include systems operating alongside with the actual heating system and contributing to a reduction in the amount of energy consumed by the actual heating system.

A further measure often used to reduce energy consumption in buildings has been to increase the thickness of wall insulations, for example. In addition, other improvements have been made to building structures that have enabled an overall decrease in heat transfer through the walls of a building compared with earlier solutions.

All the above solutions have been used separately, in different combinations and also all at the same time.

However, a disadvantage remaining in the prior art is that heat is nevertheless conducted through building structures, such as walls. Although increased insulation thickness naturally reduces heat transfer, some heat is always transferred through the walls, for example.

The invention aims at providing an arrangement that allows the prior art disadvantages to be eliminated. This is achieved by a method and arrangement of the invention. The method of the invention is characterized in that the heat recovery means is formed of a separate cellular structure to be arranged to a wall structure or the like. The arrangement of the invention is characterized in that the heat recovery means is formed of a separate cellular structure to be arranged to a building wall structure or the like.

Advantages of the invention include, above all, its simplicity and versatility. Due to the simplicity of the invention, the costs of implementing it are extremely low, i.e. the arrangement of the invention is inexpensive to install and use. A further advantage of the invention is that it is applicable both in renovation of old buildings and in new buildings, where the arrangement of the invention may be combined in an advantageous manner with factory-made building elements, for example. In addition to savings in heating energy, the invention provides an advantage relating to moisture. Moreover, the arrangement of the invention serves as an element abolishing moisture in building structures and thereby reduces heating energy consumption related to evaporation of moisture and other disadvantages caused to the structures by moisture.

The invention will be explained in the following in more detail by means of a working example described in the attached drawing, in which
Figure 1 is a schematic diagram of a basic principle of an arrangement of the invention, and
Figure 2 is a schematic perspective diagram of a detail of the arrangement of Figure 1.

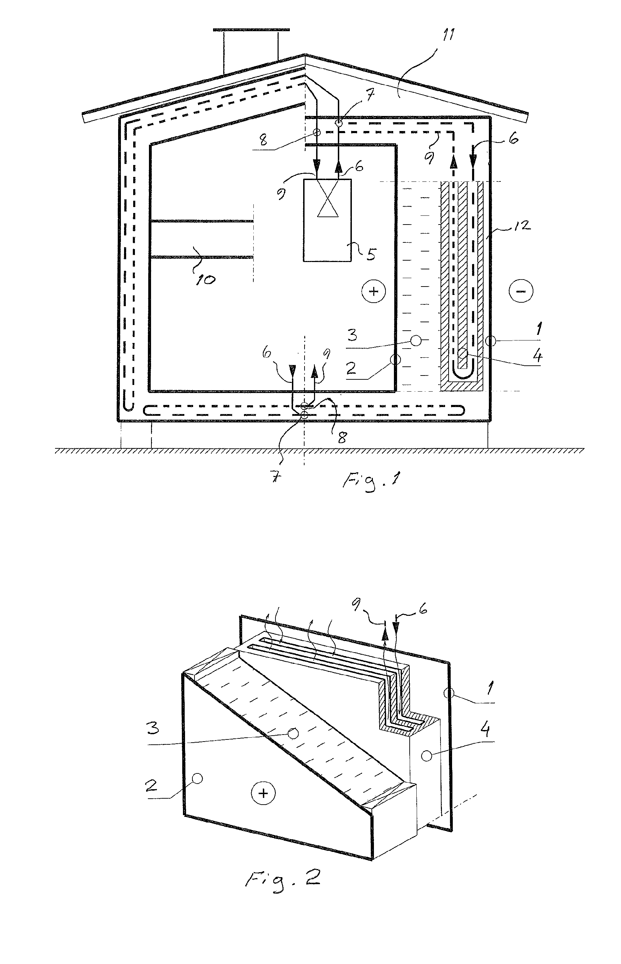

Figure 1 is a schematic diagram of an embodiment of the invention. Figure 2, in turn, is a schematic perspective diagram of a detail of the embodiment of Figure 1.

Throughout the figures, reference numeral 1 refers to an exterior wall of a building and reference numeral 2 to its interior wall. Throughout the figures, reference numeral 3 refers to a framework and heat insulation of the building.

In accordance with the basic idea of the invention, the arrangement comprises a cellular structure 4. The cellular structure 4 has been placed between the inner wall 2 and the exterior wall 1 of the building. In the working example of the figures, the cellular structure 4 has been placed between the framework and the heat insulation 3 of the building and its exterior wall 1. The cellular structure 4 is arranged to form a system of conduits that the heat leaving the building through the structures thereof heats up, air circulated in a closed circulation by the heating means/heat recovery devices 5 being arranged to travel through the conduits, recover heat transferred through the building framework 3, provided with heat insulation, and to remove moisture.

The heating means 5 may be any prior art devices, such as heat recovery devices, air pumps, and the like. Naturally a building may also be provided with some other heating system, such as an oil-fired boiler and a conventional water circulation, direct electric heating or some other system known per se. In other words, the arrangement of the invention may operate alongside a heating system known per se. However, the invention may naturally be also used, when necessary, as the only heating system of a building.

In the working example of the figures, the heating means 5 are heat recovery devices. Figure 1 is a schematic view, depicted by reference numerals 6 and 9, of air circulated in a closed circulation through a cellular structure 4. Reference numerals 7 and 8 in Figure 1 indicate the points for forming the above-mentioned closed circulation with the cellular structure from heat recovery devices and back to the heat recovery devices. The air inside the building or outside air is not mixed with the air circulating in the cellular structure. The cellular structure 4 recovers heat transferred through the framework of the building and removes moisture.

The above arrangement is based on the idea that air circulated in a closed circulation is heated as it flows through the conduits of the cellular structure 4. It should be noted in this connection that heat is constantly conducted through the wall structures of the building from the warm inner space outward to the colder outer space. This feature is shown in Figure 1 by signs + and - to schematically depict temperatures prevailing inside and outside the building. In other words, the invention makes use of heat conducted out of the building, i.e. the heat conducted out of the building is recovered. In the example of the figures, the heated air is lead to the inlet side of the recovery equipment. Heat may be led from the heat recovery equipment by means of a suitable medium to equipment used for heating the inside of the building, to equipment used for heating household water, to equipment used in floor heating, etc. The medium may be any suitable medium known per se: air, water, a suitable liquid, or the like.

Cellular structures may be placed in different locations in the building. Figure 1 is a schematic view of different placement alternatives. The number and location of the cellular structures may vary freely according to need. Naturally the conduits of the cellular structure 4 may differ from those shown in the figures, i.e. the basically U-shaped conduit system provided in a gap form is only one possible example of implementation. For example, the conduit system may consist of separate conduits running through the cellular structure from one side to the other or, alternatively, from one edge in and from the same edge out again, etc.

The cellular structure may be provided with one or more superimposed conduits. The shape and size of the conduit may vary depending on where it is used and the material and method used to manufacture it. The manufacturing material of the cellular structure may be any known building material. Examples that may be mentioned include wood, wood fibre plates, concretes, glass, plastic materials, etc. Naturally different combinations of the above materials may also be used. The material is obviously to be selected taking also moisture-related issues into account. In addition, the cellular structure may be manufactured entirely or partly from a heat insulation material or materials so that matters relating to construction physics are taken into account when different heat insulation materials are used.

In addition to what has been described above, Figure 1 shows an intermediate floor designated by reference numeral 10 and an attic designated by reference numeral 11. Of course the building is provided with a base floor solution known per se. The above facts are fully known to a person skilled in the art, wherefore they are not explained in greater detail herein. In this connection it is only stated that the invention is not in any way restricted to the above facts known per se, but the basic solutions of the building may be freely varied.

Figure 2 shows the principle of an embodiment of the invention. Like parts are denoted with like reference numerals in Figures 1 and 2. Figure 2 clearly shows that the cellular structure 4 has been placed between the exterior wall 1 of the building and its framework and heat insulation 3.

The cellular structure 4 may be a separate element placed into a wall structure of an existing building or to some other suitable structure as shown in Figure 2, for example. This kind of solution is particularly well suited for use in connection with renovation of old buildings, although naturally the invention may also be applied so that the cellular structure 4 is formed as an integral part of a prefabricated building element. The latter alternative is particularly suitable for new buildings.

An advantage of the invention, above all, is that it produces savings in heating energy. However, the invention also provides other significant advantages, because it acts as a means removing moisture in the structures of the building.

Between the cellular structure and the exterior wall it is possible to arrange a ventilation slot 12, where outside air moves. The ventilation slot 12 is shown in Figure 1. The above-mentioned moisture problems have become significant particularly in connection with increased insulation thicknesses. Similarly as in prior art buildings, the purpose of the ventilation slot in the wall structures between the exterior wall and the cellular structure is mostly to protect the exterior wall. This arrangement prevents moisture and frost from developing onto wall surfaces. In roofs a ventilation slot may be disposed of, depending on their structure, because the roofs are using a weather-/waterproof roofing, and thus any moisture that is formed becomes condensed and leaves through the rainwater system.

The above working example of the invention is not intended to limit the invention in any way, but the invention may be varied entirely freely within the scope of the claims. The cellular structure may be used also during summertime, for example, for cooling the building and/or for collecting solar heat. In addition, the structure may be used in connection with window structures, in which case glass elements are provided with one more glass between them or the space between the glass elements is separated by a blind, for example, to provide a two-part space, thus allowing a closed air circulation to be provided. Plastic is a preferred material for manufacturing the cellular structure for example for greenhouses or similar buildings, where moisture does not cause problems in terms of visibility, for example, or in other respects.

## Claims

1. A method in connection with a heating system of a building, the heating system comprising heating means/heat recovery devices(5) for heating the building, a heat recovery means being placed between an inner wall (2) and an outer wall (1) of the building and air is circulated through the heat recovery means by the heating means/heat recover devices (5) in a closed space, heat transferred from inside the building through its framework and heat insulation (3) being recovered and moisture removed by the heat recovery means, **characterized in that** the heat recovery means is formed by means of a separate cellular structure (4) to be arranged to the wall structure or the like.

2. A method according to claim 1, **characterized in that** the cellular structure (4) is placed between the framework (3) of the building, provided with heat insulation, and the outer wall (1).

3. A method according to claim 1 or 2, **characterized in that** a ventilation slot (12) for outside air is formed between the cellular structure (4) and the outer wall (1) of the building.

4. An arrangement in connection with a heating system of a building, the heating system comprising heating means/heat recovery devices (5) for heating the building, the arrangement in turn comprising a heat recovery means to be placed between the inner wall (2) and the outer wall (1) of the building and the heat recovery means being arranged to form a structure that heats up by heat transferring through the framework (3) of the building, the air circulated in a closed circulation by the heating means/heat recovery devices (5) being arranged to travel through the framework and recover heat transferred through the building framework (3), provided with heat insulation, and to remove moisture, **characterized in that** the heat recovery means is formed of a separate cellular structure (4) to be arranged to the wall structure or the like of the building.

5. An arrangement according to claim 4, **characterized in that** the cellular structure (4) is placed between the framework (3), provided with heat insulation, and the outer wall (1) of the building.

6. An arrangement according to claim 4, **characterized in that** a ventilation slot (12) for outside air is formed between the cellular structure (4) and the outer wall (1) of the building.

7. An arrangement according to claim 4, **characterized in that** the cellular structure (4) is a plate-like element with at least one conduit travelling through the element for flow of air circulated in a closed circulation.

8. An arrangement according to claim 4, **characterized in that** the heating means (5) for heating the building comprise an air pump.

9. An arrangement according to any one of preceding claims 4 to 8, **characterized in that** the cellular structure (4) is made of a wood material, wood fibre board material, concrete material, glass material, plastic material or a combination of these materials.

10. An arrangement according to any one of preceding claims 4 to 9, **characterized in that** the cellular structure (4) is entirely or partly made of a heat insulation material.
